# EUROPÄISCHE PATENTANMELDUNG

(11) **EP 3 053 862 A2**
(43) Veröffentlichungstag der Anmeldung: **10.08.2016**
(21) Anmeldenummer: 16153284.1
(22) Anmeldetag: 29.01.2016
(51) Int. Cl.: B65G 65/48, G01F 11/24

(54) **DOSIERVERFAHREN UND DOSIERVORRICHTUNG FÜR SCHÜTTGUTPARTIKEL**

(30) Priorität: 03.02.2015 DE 102015201840
(71) Anmelder: Alfons Tschritter GmbH, 97904 Dorfprozelten (DE)
(72) Erfinder: Tschritter, Thorsten, 97909 Stadtprozelten (DE)
(74) Vertreter: Maikowski & Ninnemann Patentanwälte Partnerschaft mbB

(57) **Zusammenfassung**

Die vorliegende Erfindung betrifft ein Verfahren zur Dosierung von Schüttgutpartikeln (2) unter Verwendung einer Dosiervorrichtung (1) sowie eine Dosiervorrichtung (1), wobei ein Dosierorgan (11) der Dosiervorrichtung (1) durch Drehung eine Förderbewegung ausführt, um Schüttgutpartikel (2) zu dosieren und ausgehend von einer Schüttgutzufuhr (101) der Dosiervorrichtung (1) zu einer Schüttgutabfuhr (105) der Dosiervorrichtung (1) zu fördern.

Gemäß einem ersten Erfindungsaspekt wird das Dosierorgan (11) im Betrieb der Dosiervorrichtung (1) zumindest zeitweise gezielt mit einer Rüttel- und/oder Vibrationsbewegung beaufschlagt, um ein Anhaften von Schüttgutpartikeln (2) untereinander zu reduzieren und einen gleichmäßigeren Masseausstoß aus dem Dosierorgan (11) zu erreichen.

## Beschreibung

Die Erfindung betrifft ein Verfahren zur Dosierung von Schüttgutpartikeln nach dem Oberbegriff des Anspruchs 1 sowie eine Dosiervorrichtung nach dem Oberbegriff des Anspruchs 14.

In vielen Anwendungen ist es notwendig, Schüttgüter aus einem Materialvorrat zu dosieren. Eine Möglichkeit, diese Dosierung vorzunehmen, ist beispielsweise aus der EP 1 495 230 B1 bekannt. Diese Vorrichtung weist ein Gehäuse mit einem Materialeinlass und einem Materialauslass sowie einer Aufnahme für einen Rotor als Dosierorgan auf. Zwischen der Mantelfläche des Rotors und der Innenfläche des Gehäuses besteht ein Kanal, in dem Schüttgüter durch eine Drehung des Rotors vom Materialeinlass zum Materialauslass befördert werden kann.

Nachteile derartiger Dosiervorrichtungen sind einerseits eine ungleichmäßige Dosierung des Schüttguts, sowie andererseits, dass darin ein oder mehr elastische Dichtmittel, welche in Kontakt mit dem Rotor stehen, notwendig sind. Diese Dichtmittel unterliegen einem Verschleiß, wobei einerseits das Schüttgut durch Abrieb des Dichtmittels verunreinigt werden kann und andererseits die Dichteigenschaft des Dichtmittels beeinträchtigt wird, sowie die Dosiervorrichtungen mit zunehmendem Verschleiß eine abnehmende Dosiergenauigkeit aufweisen kann. Des Weiteren ist es ein Nachteil der beschriebenen Dosiervorrichtungen, dass Schüttgut nur unzureichend gleichmäßig dosiert werden kann. Gerade bei sogenannten Mirkospritzgießverfahren (engl. "micro injection moulding") kann aber eine ungleichmäßige Zudosierung von als Schüttgut vorliegenden Partikeln zu nicht unerheblichen Konzentrationsschwankungen bei dem zu dosierten Additiv und damit zu negativen Folgen für die Qualität des spritzgegossenen Produkts führen.

Zur Dosierung von Schüttgütern sind weiterhin Förderschnecken als Dosierorgane bekannt, welche zwar regelmäßig eine ausreichend gleichmäßige Dosierung erlauben, jedoch nur in einem engen Drehzahlbereich verwendet werden können. Zudem steht bei Förderschnecken die Förderrate des zu dosierenden Schüttguts nicht in einer linearen Beziehung zu der Drehzahl der Förderschnecke, was die Handhabung erschwert und den Einsatzbereich eingrenzt.

Des Weiteren wurde beobachtet, dass - weitestgehend unabhängig von dem eingesetzten Dosierorgan - gerade bei niedrigen Förderraten und einer damit verbundenen langsamen Drehbewegung des Dosierorgans der Einfluss der Haftreibung zwischen den Schüttgutpartikeln zunimmt und hierdurch unter Umständen Pakete aneinanderhaftender Partikel statt einzelner Partikel zudosiert werden. Dies kann ebenfalls zu einer ungleichmäßigen Zudosierung und damit unerwünschten Konzentrationsschwankungen führen.

Der Erfindung liegt daher das Problem zugrunde, ein verbessertes Verfahren zur Dosierung von Schüttgutpartikeln und eine verbesserte Dosiervorrichtung bereitzustellen, die eine gleichmäßigere Dosierung des Schüttguts gestatten.

Dieses Problem wird sowohl mit einem Dosierverfahren des Anspruchs 1 oder des Anspruch 5 als auch einer Dosiervorrichtung des Anspruchs 14 gelöst.

Ein erfindungsgemäßes Verfahren zur Dosierung von Schüttgutpartikeln unter Verwendung einer Dosiervorrichtung sieht dabei gemäß einem ersten Aspekt vor, dass ein Dosierorgan der Dosiervorrichtung durch Drehung eine Förderbewegung ausführt, um Schüttgutpartikel zu dosieren und ausgehend von einer Schüttgutzufuhr der Dosiervorrichtung zu einer Schüttgutabfuhr der Dosiervorrichtung zu fördern, und das Dosierorgan im Betrieb der Dosiervorrichtung zumindest zeitweise gezielt mit einer Rüttel- und/oder Vibrationsbewegung beaufschlagt wird.

Durch die Beaufschlagung des Dosierorgans mit einer Rüttel- und/oder Vibrationsbewegung kann ein Anhaften einzelner Schüttgutpartikel aneinander vermieden oder zumindest reduziert werden, so dass auch bei geringen Förderraten und damit verbundener langsamer Drehbewegung des Dosierorgans nicht zusammenhängende Formationen von Partikeln lawinenartig zusammen an der Schüttgutabfuhr vorliegen und zudosiert werden. Es hat sich vielmehr gezeigt, dass die zusätzliche gezielte Beaufschlagung mit einer Rüttel- und/oder Vibrationsbewegung beispielsweise zu einem gleichmäßigeren Einfüllen der Schüttgutpartikel in einen Dosierkanal des Dosierorgans und zu einer Erhöhung der Packungsdichte der Schüttgutpartikel an oder in dem Dosierorgan führt. Zudem kann insbesondere bei Dosiervorrichtungen, bei denen die Schüttgutpartikel einer Schüttgutabfuhr mithilfe der Schwerkraft zudosiert werden, durch die Beaufschlagung des Dosierorgans mit einer Rüttel- und/oder Vibrationsbewegunng erreicht werden, dass die Haftreibung und mechanische Verhakung der Schüttgutpartikel untereinander stark reduziert wird. Dies hat zur Folge, dass Schüttgutpartikel bevorzugt einzeln abgeworfen werden und hierbei andere Schüttgutpartikel nicht mehr oder allenfalls sehr selten mit sich ziehen. Im Ergebnis kann somit durch die erfindungsgemäße Beaufschlagung des Dosierorgans mit einer gezielten Rüttel- und/oder Vibrationsbewegung ein deutlich gleichmäßiger Masseausstoß von Schüttgutpartikeln aus dem Dosierorgan erreich werden.

Als Schüttgut wird hierbei jedwedes Gemenge bezeichnet, welches in einer schüttfähigen Form vorliegt. Das Schüttgut kann beispielsweise Kunststoffgranulat, Kalk, Holzpartikel, Düngemittel, Futtermittel, Tabletten, Lebensmittel, wie zum Beispiel Getreide, Baustoffe, Rohstoffe oder jedes andere Schüttgut sein oder eine beliebige Mischung aus verschiedenen Schüttgütern. Die Partikelgröße, d.h., die Korngröße oder Stückgröße, des Schüttguts kann hierbei je nach Schüttgut unterschiedlich sein und insbesondere kann ein Gemenge auch aus Partikeln mit unterschiedlicher Größe zusammengesetzt sein. Beispielsweise werden Schüttgutpartikel mit mittlerem Durchmesser zwischen 0,5 und 2 mm gefördert, die auch länglich sein können, mit mittleren Längen zwischen 1 und 3 mm. Allerdings können auch Schüttgüter mit deutlich davon abweichenden Partikelgrößen dosiert und gefördert werden, wie beispielsweise Schüttgut in Pulverform oder in deutlich größeren Abmessungen. Vorteilhaft kann der Einsatz eines erfindungsgemäßen Dosierverfahrens für Schüttgutpartikel sein. Die in einem Spritzgießverfahren eingesetzt werden.

Unter einem Dosierorgan wird jede Komponente oder Baugruppe einer Dosiervorrichtung verstanden, die unter Drehung Schüttgutpartikel von einer Schüttgutzufuhr zu einer Schüttgutabfuhr fördern und die Schüttgutpartikel in vordefinierten Mengen an der Schüttgutabfuhr zur Verfügung stellen kann. Ein Dosierorgan kann beispielsweise eine Dosierwalze, Dosierschnecke oder Dosierscheibe umfassen. Eine erfindungsgemäße Dosiervorrichtung, wie nachfolgend noch näher erläutert werden wird, kann somit insbesondere als Walzendosierer oder Schneckendosierer für Schüttgutpartikel ausgebildet sein.

In einer Ausführungsvariante wird das Dosierorgan während einer Förderbewegung mit einer Rüttel- und/oder Vibrationsbewegung beaufschlagt. Mit anderen Worten, wird hierbei während der Förderung der Schüttgutpartikel in Richtung der Schüttgutabfuhr einer Drehbewegung des Dosierorgans eine Rüttel- und/oder Vibrationsbewegung überlagert. Bei Nutzung eines einzelnen Stellantriebs für die Verstellung des Dosierorgans kann auch davon gesprochen werden, dass der Drehbewegung des Dosierorgans eine Rüttel- und/oder Vibrationsbewegung aufmoduliert wird.

In einer möglichen Ausführungsvariante wird das Dosierorgan über die gesamte Dauer einer Förderbewegung mit einer Rüttel- und/oder Vibrationsbewegung beaufschlagt. Hierunter wird beispielsweise verstanden, dass bei einer diskontinuierlichen Zudosierung von Schüttgutpartikeln, bei der das Dosierorgan zwischen zwei Dosierzyklen ruht und nicht gedreht wird, das Dosierorgan stets mit einer Rüttel- und/oder Vibrationsbewegung beaufschlagt wird, sobald das Dosierorgan (wieder) dreht, um Schüttgutpartikel zu fördern. Alternativ oder ergänzend kann vorgesehen sein, dass die Beaufschlagung mit einer Rüttel- und/oder Vibrationsbewegung nur für ein vorgegebenes Zeitintervall und/oder in einem vordefinierten Drehwinkelbereich während der Förderbewegung des Dosierorgans erfolgt, zum Beispiel nur am Anfang und/oder am Ende oder nur in einem (mittleren) Zeitfenster nach dem Start und vor dem Ende der Förderbewegung. Auch kann die Beaufschlagung des Dosierorgans mit einer zusätzlichen Rüttel- und/oder Vibrationsbewegung nur bei jedem zweiten oder dritten Dosierzyklus erfolgen. Hierdurch lässt sich eine größere Variabilität erreichen und gegebenenfalls Energie sparen.

Gemäß einem zweiten Erfindungsaspekt ist ein Verfahren zur Dosierung von Schüttgutpartikeln unter Verwendung einer Dosiervorrichtung vorgesehen, bei dem das Dosierorgan zur Förderung von Schüttgutpartikeln zu der Schüttgutabfuhr in eine erste Drehrichtung mit einer ersten Drehgeschwindigkeit gedreht wird und das Dosierorgan vor dem Beginn und/oder nach dem Ende einer Förderbewegung eine Rückwärtsbewegung durch eine Drehung in eine entgegengesetzte zweite Drehrichtung mit einer zu der ersten Drehgeschwindigkeit verschiedenen zweiten Drehgeschwindigkeit ausführt. Statt das Dosierorgan kontinuierlich in einer Drehrichtung zu drehen, wird hier folglich das Dosierorgan nur oszilliert.

In einer Variante ist die erste Drehgeschwindigkeit, mit der durch das Dosierorgan Schüttgutpartikel zu der Schüttgutabfuhr transportiert werden, kleiner als die zweite Drehgeschwindigkeit, mit der das Dosierorgan zurückgedreht wird. Vorzugsweise wird die das Dosierorgan, bespielweise in Form einer Dosierwalze, mit relativ hoher Geschwindigkeit zurück gedreht. Dabei rutscht das Dosierorgan quasi unter den an der Schüttgutzufuhr vorgehaltenen Schüttpartikeln durch. Danach wird das Dosierorgan mit mindestens dem gleichen Drehwinkel wieder nach vorne, d.h., in Richtung der Schüttguttabfuhr gedreht, aber etwas langsamer, so dass Schüttgutpartikel transportiert werden. Die zum Transport der Schüttgutpartikel vorgesehene Drehgeschwindigkeit ist hierbei beispielsweise um wenigstens 25% kleiner als die Drehgeschwindigkeit, mit der zurückgedreht wird. In einer Ausführungsvariante liegt das Verhältnis von erster zu zweiter Drehgeschwindigkeit bei etwa 1:2, d.h., die zum Transport vorgesehene Drehgeschwindigkeit beträgt etwa 50% der Drehgeschwindigkeit, mit der zurückgedreht wird. Die zu dosierende Materialmenge kann über die Anzahl der Hübe je Zeiteinheit, die Verfahrgeschwindigkeiten des Dosierorgans und den Drehwinkel kontrolliert werden.

In einem Ausführungsbeispiel wird durch die erfindungsgemäße Lösung gemäß dem zweiten Erfindungsaspekt nur ein Bruchteil, z.B. ca. 2 / 3, einer Mantelfläche des Dosierorgans für den Transport der Schüttgutpartikel genutzt. Der für den Transport nicht genutzte Teil der Mantelfläche kann beispielsweise mit einem Entleerkanal versehen werden, durch den auf einfache und auch automatisierte Weise Schüttgut abgelassen werden kann.

Des Weiteren kann vorgesehen sein, dass das Dosierorgan vor dem Beginn und/oder nach dem Ende einer Förderbewegung mit einer Rüttel- und/oder Vibrationsbewegung beaufschlagt wird. Hiermit kann beispielsweise erreicht werden, dass bereits an oder in dem Dosierorgan vorliegende Schüttgutpartikel vor dem Beginn oder nach dem Ende eines Dosierzyklus gleichmäßiger verdichtet werden. Durch eine gleichmäßigere Verdichtung kann beispielsweise für eine darauf folgende Förderbewegung das Zuführen von Schüttgutpartikeln an das Dosierorgan erleichtert und/oder bereits eine etwaige Verhakung zwischen einzelnen Schüttgutpartikeln gelöst sein. Demgemäß ist auch eine Variante denkbar, bei der im Betrieb der Dosiervorrichtung das Dosierorgan lediglich vor dem Beginn und/nach dem Ende einer Förderbewegung mit einer Rüttel- und/oder Vibrationsbewegung beaufschlagt wird, während der Förderbewegung jedoch lediglich eine gleichförmige Drehung des Dosierorgans ausgeführt wird, um die Schüttgutpartikel zu dosieren.

In einem Ausführungsbeispiel wird das Dosierorgan vor dem Beginn und/oder nach dem Ende einer Förderbewegung zurückgedreht, insbesondere, um bei einer Rüttel- und/oder Vibrationsbewegung des Dosierorgans zu vermeiden, dass im Bereich der Schüttgutabfuhr bereits vorliegende Schüttgutpartikel durch das oszillierende und/oder vibrierende Dosierorgan unbeabsichtigt eindosiert werden. Während das Dosierorgan also zur Förderung von Schüttgutpartikeln zu der Schüttgutabfuhr in eine erste Drehrichtung gedreht wird, führt es hier vor dem Beginn und/oder nach dem Ende einer Förderbewegung durch eine Drehung in eine entgegengesetzte zweite Drehrichtung eine Rückwärtsbewegung aus. Diese Rückwärtsbewegung wird vorzugsweise für eine vordefinierte Zeitdauer und/oder einen vordefinierten Drehwinkel ausgeführt bzw. um vorgegebene Anzahl Schritte bei Verwendung eines Schrittmotors als Teil eines Antriebs zur Drehung des Dosierorgans.

Beispielsweise kann das Dosierorgan auch erst nach dem Ende der Rückwärtsbewegung und damit einem Stoppen des Dosierorgans mit einer Rüttel- und/oder Vibrationsbewegung beaufschlagt werden. Indem die Beaufschlagung mit einer Rüttel- und/oder Vibrationsbewegung erst nach Abschluss der Rückwärtsbewegung erfolgt, kann in vergleichsweise einfacher Weise sichergestellt sein, dass zwar an oder in dem Dosierorgan vorliegende Schüttgutpartikel verdichtet und ein etwaiges Anhaften der Schüttgutpartikel untereinander verringert wird, durch die Rüttel- und/oder Vibrationsbewegung aber nicht unbeabsichtigt Schüttgutpartikel in die Schüttgutabfuhr gelangen, die bereits durch das Dosierorgan fast bis zu der Schüttgutabfuhr gefördert worden waren.

Selbstverständliche kann das Dosierorgan nicht (nur) nach dem Ende einer Rückwärtsbewegung und einem dem Stoppen des Dosierorgans mit einer Rüttel- und/oder Vibrationsbewegung beaufschlagt werden, sondern (auch) zumindest zeitweise während der Rückwärtsbewegung oder über die Gesamtdauer der Rückwärtsbewegung.

Mit dem Ende eines Dosierzyklus oder zu Beginn eines neuen Dosierzyklus kann ein Zurückdrehen des Dosierorgans in eine Ausgangsstellung erfolgen, die das Dosierorgan nach dem Ende der Förderbewegung eingenommen hat. In der zuerst genannten Variante nimmt das Dosierorgan folglich nach der Rückwärtsbewegung eine Startstellung für den neuen Dosierzyklus ein, so dass das Dosierorgan zunächst den durch die Rückwärtsbewegung zurückgelegten Drehwinkel überbrücken muss, bevor an die Schüttgutabfuhr neue Schüttgutpartikel gefördert werden können. In der anderen genannten Variante, endet ein Dosierzyklus mit dem Zurückstellen des Dosierorgans durch Drehung in die erste Drehrichtung, so dass das Dosierorgan wieder in der Ausgangsstellung vorliegt, die es nach dem Ende der Förderbewegung eingenommen hatte. Die Ausgangsstellung vor der Rückwärtsbewegung und die Startstellung für den nachfolgenden Dosierzyklus sollen also identisch sein. Das Dosierorgan wird somit am Ende einer Förderbewegung zunächst gestoppt, führt dann eine Rückwärtsbewegung aus und im Anschluss wieder eine Vorwärtsbewegung, um eine Startstellung für einen neuen Dosierzyklus einzunehmen.

In einem Ausführungsbeispiel wird das Dosierorgan im Betrieb der Dosiervorrichtung mit Rüttel- und/oder Vibrationsbewegungen unterschiedlicher Stärke beaufschlagt. Beispielsweise wird das Dosierorgan hierbei während einer Förderbewegung mit einer stärkeren Rüttel- und/oder Vibrationsbewegung beaufschlagt als während oder nach einer Rückwärtsbewegung am Ende eines Dosierzyklus. Unterschiedliche Stärken einer Rüttel- und/oder Vibrationsbewegung können hierbei beispielsweise durch unterschiedliche Amplitudenhöhen, Schwingungsbreiten und/oder Schwingungsfrequenzen gekennzeichnet sein.

In einer Ausführungsvariante wird das Dosierorgan während einer Förderbewegung mit Rüttel- und/oder Vibrationsbewegungen unterschiedlicher Stärke beaufschlagt. Während der Drehung des Dosierorgans wird somit beispielsweise der Drehbewegung eine Rüttel- und/oder Vibrationsbewegung mit veränderlicher Amplitude überlagert. Durch eine starke Vibration am Beginn der Förderbewegung kann die Haftreibung zwischen den einzelnen Schüttgutpartikeln gelöst werden. Durch die leichtere Vibration am Ende einer Förderbewegung und damit gegen Ende eines Dosierzyklus kann demgegenüber erreicht werden, dass das Risiko für eine unkontrollierte Eindosierung von Schüttgutpartikeln infolge des Rüttelns und/oder Vibrierens vermindert ist.

Alternativ oder ergänzend kann das Dosierorgan während einer Förderbewegung mit einer Rüttel- und/oder Vibrationsbewegung einer ersten Stärke beaufschlagt werden und während einer Rückwärtsbewegung und/oder nach Abschluss einer Rückwärtsbewegung mit wenigstens einer Rüttel- und/oder Vibrationsbewegung einer hierzu unterschiedlichen zweiten Stärke.

Grundsätzlich kann die Beaufschlagung des Dosierorgans mit einer Rüttel- und/oder Vibrationsbewegung durch einen separaten Stellantrieb erfolgen, der zusätzlich zu einem Stellantrieb für die Drehung des Dosierorgans ausgebildet und vorgesehen ist. In einer Variante wird demgegenüber eine Rüttel- und/oder Vibrationsbewegung durch eine oszillierende Drehbewegung des Dosierorgans durch den auch für die Drehung des Dosierorgans vorgesehenen Stellantrieb erzeugt. Eine gleichförmige Drehbewegung wird hier somit gezielt mit Richtungs- und/oder Geschwindigkeitswechseln überlagert, um hierdurch eine Rüttel- und/oder Vibrationsbewegung zu erzeugen.

Gemäß einem weiteren Aspekt der vorliegenden Erfindung ist eine Dosiervorrichtung für Schüttgutpartikel, insbesondere zur Durchführung eines erfindungsgemäßen Verfahrens vorgeschlagen, dass ein die Schüttgutpartikel dosierendes Dosierorgan aufweist, wobei das Dosierorgan durch Drehung eine Förderbewegung ausführt, um Schüttgutpartikel zu dosieren und ausgehend von einer Schüttgutzufuhr der Dosiervorrichtung zu einer Schüttgutabfuhr der Dosiervorrichtung zu fördern. Erfindungsgemäß weist die Dosiervorrichtung wenigstens einen fremdkraftbetätigten Stellantrieb auf, mittels dem
- das Dosierorgan im Betrieb der Dosiervorrichtung zumindest zeitweise gezielt mit einer Rüttel- und/oder Vibrationsbewegung beaufschlagt wird und/oder
- das Dosierorgan zur Förderung von Schüttgutpartikeln zu der Schüttgutabfuhr in eine erste Drehrichtung mit einer ersten Drehgeschwindigkeit gedreht wird und das Dosierorgan vor dem Beginn und/oder nach dem Ende einer Förderbewegung in eine entgegengesetzte zweite Drehrichtung mit einer zu der ersten Drehgeschwindigkeit verschiedenen zweiten Drehgeschwindigkeit gedreht wird.

Die zuvor im Zusammenhang mit Ausführungsvarianten für ein erfindungsgemäßes Verfahren erläuterten Vorteile und Merkmale gelten somit auch für Ausführungsvarianten einer erfindungsgemäßen Dosiervorrichtung und umgekehrt. Beispielsweise kann der Stellantrieb einer erfindungsgemäßen Dosiervorrichtung mit einer Steuerelektronik gekoppelt sein, die den Stellantrieb derart ansteuert, dass damit ein erfindungsgemäßes Verfahren ausgeführt wird.

Bevorzugt ist hierbei das Dosierorgan mittels des Stellantriebs für die Ausführung der Förderbewegung drehbar und der Stellantrieb darüber hinaus dazu ausgebildet und vorgesehen, durch eine oszillierende Drehbewegung des Dosierorgans die Förderbewegung mit einer Rüttel- und/oder Vibrationsbewegung zu überlagern.

Wie bereits obig erläutert, kann das drehbare Dosierorgan beispielsweise eine Dosierwalze, Dosierschnecke oder Dosierscheibe umfassen. Mit besonderem Vorteil umfasst eine solche Dosierwalze, Dosierschnecke oder Dosierscheibe einen Schüttgutkanal zur Beförderung der Schüttgutpartikel. Ein solcher Schüttgutkanal dient dann der Aufnahme und dem Transport von Schüttgutpartikeln.

Gemäß einer vorteilhaften Weiterbildung sind im Schüttgutkanal Schüttguttaschen zur Aufnahme und Beförderung der Schüttgutpartikel vorgesehen. Vorzugsweise sind diese Schüttguttaschen muldenförmig mit einer runden/ovalen/elliptischen Öffnung ausgebildet, allerdings sind auch davon abweichende Formen denkbar. Auch die Schüttguttaschen dienen der Aufnahme und dem Transport der Schüttgutpartikel. Schüttgutpartikel können an der Schüttgutzufuhr in die Schüttguttaschen einfallen und durch diese in Drehbewegung mitgenommen werden. Schüttgutpartikel, die von einer solchen Schüttguttasche aufgenommen sind, jedoch größer sind als die Schüttguttasche, können umliegende andere Schüttgutpartikel in die Drehbewegung mitnehmen.

Eine Ausführungsvariante einer erfindungsgemäßen Dosiervorrichtung kann mit einer die Schüttgutpartikel dosierenden Dosierwalze ausgestattet sein, die einen oberen Totpunkt und einen unteren Totpunkt aufweist, welche durch den oberen bzw. den unteren Schnittpunkt einer senkrechten Achse durch die Drehachse einer Drehrichtung der Dosierwalze mit einer Mantelfläche der Dosierwalze definiert werden.

Hierbei ist vorgesehen, dass die Zufuhr der Schüttgutpartikel durch eine Öffnung einer Schüttgutzufuhr in Drehrichtung der Dosierwalze nach dem oberen Totpunkt erfolgt und die Abfuhr der Schüttgutpartikel durch eine Öffnung einer Schüttgutabfuhr in Drehrichtung der Dosierwalze nach dem unteren Totpunkt erfolgt.

Durch eine derartige Anordnung wird erreicht, dass die Schüttgutpartikel gleichmäßig und schonend durch eine Drehung der Dosierwalze in der Drehrichtung von der Schüttgutzufuhr zur Schüttgutabfuhr befördert werden können. Durch Aktivieren und/oder die Geschwindigkeit der Drehung wird das Schüttgut dosiert. Die Förderrate kann dabei in linearer Beziehung zur Drehgeschwindigkeit der Dosierwalze stehen. Eine Ausführungsform der Dosiervorrichtung kann mit Drehgeschwindigkeiten über einen Verstellbereich von 1:1000 betrieben werden, wodurch die Dosiervorrichtung besonders vielseitig und flexibel einsetzbar ist.

Die Zufuhr/Abfuhr der Schüttgutpartikel wird durch die entsprechenden Öffnungen definiert, durch welche hindurch die Schüttgutpartikel auf die Dosierwalze treffen bzw. sich von der Dosierwalze entfernen. Das bedeutet auch, dass sich übrige Teile der Schüttgutzufuhr und der Schüttgutabfuhr vor die entsprechenden Totpunkte erstrecken können.

Die genaue Anordnung der Schüttgutzufuhr und der Schüttgutabfuhr (einschließlich der entsprechenden Öffnungen) ist hierbei nicht näher festgelegt. Vorzugsweise befindet sich die Zufuhr allerdings in einer Position kurz vor 12 Uhr sofern die Drehrichtung der Dosierwalze gegen den Uhrzeigersinn gerichtet ist.

Die Schüttgutabfuhr kann sich grundsätzlich - im bestimmungsgemäß augestellten Zustand der Dosiervorrichtung - parallel zur senkrechten Achse erstrecken, entsprechend der senkrechten Fallrichtung der Schüttgutpartikel an der Schüttgutabfuhr. Denkbar sind aber auch andere Ausgestaltungen, beispielsweise kann die Schüttgutabfuhr schräg verlaufen um die Schüttgutpartikel an einen bestimmten Ort zu leiten. Zur Abfuhr der Schüttgutpartikel kann es vorteilhaft sein, wenn die Innenfläche des Gehäuses eine zylindrische Form aufweist und die in Drehrichtung vordere Innenfläche der Schüttgutabfuhr im Wesentlichen tangential auf die Innenfläche des Gehäuses stößt.

Weitere Vorteile und Merkmale der vorliegenden Erfindung werden bei der nachfolgenden Beschreibung von Ausführungsbeispielen anhand der Figuren deutlich werden.

### Hierbei zeigen:

- Fig. 1A: ein erstes Ausführungsbeispiel einer erfindungsgemäßen Dosiervorrichtung in einer Draufsicht entlang der Drehachse eines als Dosierwalze ausgebildeten Dosierorgans;
- Fig. 1B: eine Seitenansicht der Dosierwalze;
- Fig. 1C: die Dosiervorrichtung der Figur 1A mit zu dosierenden Schüttgutpartikeln;
- Fig. 2: ein Weg-Zeit-Diagramm zur Veranschaulichung des Ablaufs aus dem Stand der Technik bekannter Dosierzyklen unter gleichförmiger Drehbewegung eines Dosierorgans;
- Fig. 3: ein Weg-Zeit-Diagramm zur Veranschaulichung einer ersten Ausführungsvariante eines erfindungsgemäßen Verfahrens, bei dem einer Drehbewegung des Dosierorgans zur Dosierung von Schüttgutpartikeln eine Oszillation der Geschwindigkeit aufmoduliert ist, um das Dosierorgan mit einer Rüttel- und/oder Vibrationsbewegung zu beaufschlagen;
- Fig. 4: ein Weg-Zeit-Diagramm für eine weitere Ausführungsvariante, bei dem das Dosierorgan während einer Förderbewegung mit Rüttel- und/oder Vibrationsbewegungen unterschiedlicher Stärke beaufschlagt wird;
- Fig. 5A: ein Weg-Zeit-Diagramm einer weiteren Ausführungsvariante, bei der das Dosierorgan zu Beginn eines Dosierzyklus eine Rückwärtsbewegung ausführt und hierbei mit einer Rüttel- und/oder Vibrationsbewegung beaufschlagt wird;
- Fig. 5B: ein Weg-Zeit-Diagramm für eine Weiterbildung auf Basis der Figur 5A, bei der das Dosierorgan zu Beginn eines Dosierzyklus mit einer stärkeren Rüttel- und/oder Vibrationsbewegung beaufschlagt wird als während der nachfolgenden Förderbewegung;
- Fig. 6: ein Weg-Zeit-Diagramm für eine weitere Ausführungsvariante, bei der das Dosierorgan nach dem Ende eines Dosierzyklus eine Rückwärtsbewegung ausführt und im Anschluss daran mit einer Rüttel- und/oder Vibrationsbewegung beaufschlagt wird;
- Fig. 7A: ein weiteres Ausführungsbeispiel einer erfindungsgemäßen Dosiervorrichtung in einer Draufsicht entlang der Drehachse eines als Dosierwalze ausgebildeten Dosierorgans mit einem darin ausgebildeten Entleerkanal in einer Dosierstellung;
- Fig. 7B: die Dosiervorrichtung der Figur 7A mit der Dosierwalze in einer Entleerstellung.

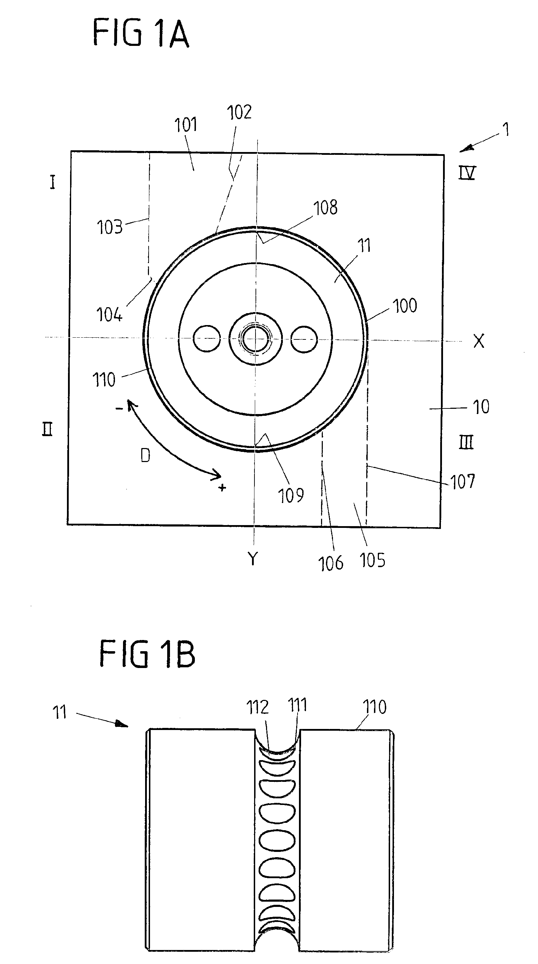

Figur 1A zeigt eine Dosiervorrichtung 1 in einer Draufsicht entlang der Drehachse der Drehrichtung D+ der Dosierwalze 11. Die Dosierwalze 11 ist hierbei in einer dafür vorgesehenen Aussparung im Gehäuse 10 angeordnet und drehbar gelagert. Sie ist dabei derart ausgeführt, dass zwischen der Mantelfläche 110 der Dosierwalze 11 und der Innenfläche 100 des Gehäuses 10 ein gleichmäßiger Spalt besteht. Durch die Lagerung der Dosierwalze 11 mit einem Spalt können Schüttgutpartikel 2 mit unterschiedlicher Größe gleichmäßig und schonend befördert und dosiert werden, ohne dass es zu einem Verklemmen von Schüttgutpartikeln 2 in der Dosiervorrichtung 1 kommt. Die Breite des Spalts ist so gewählt, dass Schüttgutpartikel 2 nicht hinein geraten können. Bei einer im Wesentlichen zylindrisch geformten Dosierwalze 11 ist die Drehachse der Drehrichtung D der Dosierwalze 11 bevorzugt identisch mit der Zylinderachse der Dosierwalze 11.

Wie in Figur 1A zu erkennen, ist die Dosierwalze 11 zylindrisch geformt und in eine zylindrische Ausnehmung (Bohrung) des Gehäuses 10 eingesetzt. Da keine Abstreifer in den Schüttgutkanal 111 eingreifen, ist die Dosierwalze 11 leicht zu entnehmen und wieder einzusetzen.

Das zu dosierende Schüttgut wird der Dosierwalze 11 über die Schüttgutzufuhr 101 zugeführt. Die Schüttgutzufuhr 101 kann z.B. an einen Schüttgutvorrat oder eine andere Zufuhrvorrichtung angeschlossen sein. Die Schüttgutzufuhr 101 ist in Figur 1A als eine trichterförmige Ausnehmung im Gehäuse 10 dargestellt. Die Schüttgutzufuhr 101 wird in Drehrichtung D+ gesehen von einer hinteren und einer vorderen Innenfläche 102, 103 begrenzt. Die hintere Innenfläche 102 verhindert, dass Schüttgutpartikel 2 entgegen der Drehrichtung durch die Dosiervorrichtung 1 fallen bzw. geschoben werden. Zwischen dien Innenflächen 102, 103 erstreckt sich eine Öffnung, durch welche hindurch die Schüttgutpartikel 2 auf die Dosierwalze 11 auftreffen. Die Beförderung der Schüttgutpartikel 2 durch die Schüttgutzufuhr 101 erfolgt dabei mit Hilfe der Schwerkraft

Die Ausführungsform der Dosiervorrichtung 1 weist die in Drehrichtung D+ gesehen vordere Innenfläche 103 der Schüttgutzufuhr 101 eine Kante 104 auf, welche im Wesentlichen senkrecht auf die auf die Mantelfläche 110 der Dosierwalze 11 stößt. Durch eine derart geformte Kante 104 kann die Dosierung der Schüttgutpartikel 2 gleichmäßig erfolgen, ein Verklemmen von Schüttgutpartikeln 2 zwischen der Dosierwalze 11 und der Innenfläche 100 des Gehäuses 10 wird vermindert.

Wie anhand der nachfolgenden Figur 1B näher erläutert werden wird, ist in der Mantelfläche 110 der Dosierwalze 11 ein Schüttgutkanal 111 zur Aufnahme von Schüttgutpartikeln 2 eingeformt, in welchen die Schüttgutpartikel 2 an der Schüttgutzufuhr 101 zugeführt werden. Durch die Drehbewegung der Dosierwalze 11 in Drehrichtung D werden die Schüttgutpartikel 2 in Drehrichtung D+ gefördert. Von der Schüttgutzufuhr 101 bis zum unteren Totpunkt 109 kommt es durch Einwirkung der Schwerkraft zu einer Auflockerung der Schüttgutpartikel 2. Von dem unteren Totpunkt 109 bis zur Schüttgutabfuhr 105 werden die Schüttgutpartikel 2 durch die Drehung der Dosierwalze 11 gegen die Schwerkraft gefördert.

Die Schüttgutabfuhr 105 ist in Figur 1A ähnlich der Schüttgutzufuhr 101 als eine Ausnehmung im Gehäuse 10 der Dosiervorrichtung 1 dargestellt. Das Gehäuse 10 kann aus einem einzelnen Teil bestehen oder aus einer Vielzahl von Teilen zusammengesetzt sein. Die in Drehrichtung D+ gesehen hintere und vordere Innenfläche 106, 107 der Schüttgutabfuhr 105 sind im Wesentlichen parallel zueinander sowie im Wesentlichen parallel zur senkrechten Achse Y geformt. Die Abfuhr der Schüttgutpartikel 2 erfolgt durch eine sich zwischen den Innenflächen 106, 107 der Schüttgutabfuhr 105 erstreckende Öffnung. Durch diese Öffnung können Schüttgutpartikel 2 aus der Schüttgutabfuhr 105 sowie aus der Dosiervorrichtung 1 austreten, beispielsweise aufgrund der Schwerkraft.

Bei einer Ausführungsform der Dosiervorrichtung 1 erfolgt die Zufuhr der Schüttgutpartikel 2 (durch die Öffnung der Schüttgutzufuhr 101) in Drehrichtung D+ der Dosierwalze 11 nach dem oberen Totpunkt 108, während die Abfuhr der Schüttgutpartikel 2 (durch die Öffnung der Schüttgutabfuhr 105) in Drehrichtung D+ der Dosierwalze 11 nach dem unteren Totpunkt 109 erfolgt. Die in Figur 1A dargestellten Öffnungen befinden sich an dementsprechenden Positionen. Allerdings ist die genaue Anordnung der Öffnungen beliebig, solange sie die zuvor genannten Anforderungen erfüllt. So können die Öffnungen auch breiter oder schmaler als in Figur 1A dargestellt ausgeführt werden oder in geringerer oder größerer Entfernung (in Drehrichtung D+) zu den entsprechenden Totpunkten 108, 109 vorgesehen sein.

Die Innenflächen der Schüttgutzufuhr 101 und der Schüttgutabfuhr 105 - hierbei sind die in Figur 1A dargestellten Flächen 102, 103, 106, 107, sowie die in Figur 1A nicht dargestellten, entlang der Drehachse der Drehrichtung D beabstandeten Flächen gemeint - können beispielsweise als ebene Flächen ausgebildet sein und somit einen Schacht bilden, der einen rechteckigen Querschnitt (in der wagrechten Ebene) aufweist. Gleichermaßen können die genannten Flächen jedoch auch gebogen sein, so dass sich beispielsweise ein kreisförmiger oder ovaler Querschnitt der Schüttgutzufuhr 101 und der Schüttgutabfuhr 105 in der wagrechten Ebene ergibt. Die in Figur 1A nicht dargestellten, entlang der Drehachse der Drehrichtung D beabstandeten Innenflächen der Schüttgutzufuhr 101 und der Schüttgutabfuhr 105 können insbesondere derart ausgeführt sein, dass die Schüttgutpartikel 2 nur an den Teil der Mantelfläche 110 der Dosierwalze 11 geleitet werden, an dem der Schüttgutkanal 111 eingeformt ist.

Der Schüttgutkanal 111 der Dosierwalze 11 ist in einer beispielhaften Ausführungsformen in der Figur 1B dargestellt. Figur 1B zeigt dabei die Dosierwalze 11 in einer ersten, zylindrischen Ausführungsform in einer seitlichen Ansicht, d.h. in einer Blickrichtung senkrecht zur Zylinderachse der Dosierwalze 11. Die dargestellte Dosierwalze 11 weist einen an der Mantelfläche 110 umlaufenden Schüttgutkanal 111 auf, in den in regelmäßigen Abständen Schüttguttaschen 112 eingeformt sind. Die Schüttguttaschen 112 dienen der Aufnahme und dem Transport von Schüttgutpartikeln 2. Die Größe der Schüttguttaschen 112 kann an die maximale oder die durchschnittliche Größe der zu transportierenden Schüttgutpartikel 2 angepasst werden. Es ist ferner möglich, dass die Schüttguttaschen 112 in verschiedenen Größen vorgesehen sind.

Die in Figur 1B dargestellten Schüttguttaschen 112 sind muldenförmig ausgestaltet, allerdings sind beliebige Abwandlungen von dieser Form denkbar, solange die Schüttguttaschen 112 zur Aufnahme und/oder zum Transport der Schüttgutpartikel 2 geeignet sind. Auch ist es nicht zwingend notwendig, dass die Schüttguttaschen 112 in regelmäßigen Abständen im Schüttgutkanal 111 vorgesehen sind. Auch ist es möglich, dass die Abstände zwischen Schüttguttaschen 112 variieren. Ferner ist es denkbar, dass nicht am gesamten Schüttgutkanal 111, d.h. über den gesamten Umfang der Mantelfläche 110 der Dosierwalze 11, Schüttguttaschen 112 vorgesehen sind. Je nach Beschaffenheit des Schüttguts und sofern die Reibung zwischen dem Schüttgut und dem Schüttgutkanal 111 ausreichend groß ist, dass die Schüttgutpartikel 2 in Drehrichtung D der Dosierwalze 11 mitgenommen werden, kann auch ganz auf Schüttguttaschen 112 verzichtet werden, oder lediglich eine Schüttguttasche 112 im Schüttgutkanal 111 vorgesehen sein. Anstelle von Schüttguttaschen 112 können gegebenenfalls auch Noppen am Schüttgutkanal 111 vorgesehen sein. Entsprechend können auch Querrippen am Schüttgutkanal 111 vorgesehen sein.

Der Schüttgutkanal 111 und/oder die Schüttguttaschen 112 können in die Dosierwalze 11 eingearbeitet sein, z.B. durch Fräsen, oder zusammen mit der Dosierwalze 11 geformt werden, z.B. durch einen Spritzguss.

Je nach Beschaffenheit des zu transportierenden Schüttguts kann der Schüttgutkanal 111 schmaler oder breiter als der Schüttgutkanal 111 in Figur 1B sein und insbesondere mehrere umlaufende Reihen von Schüttguttaschen 112 umfassen.

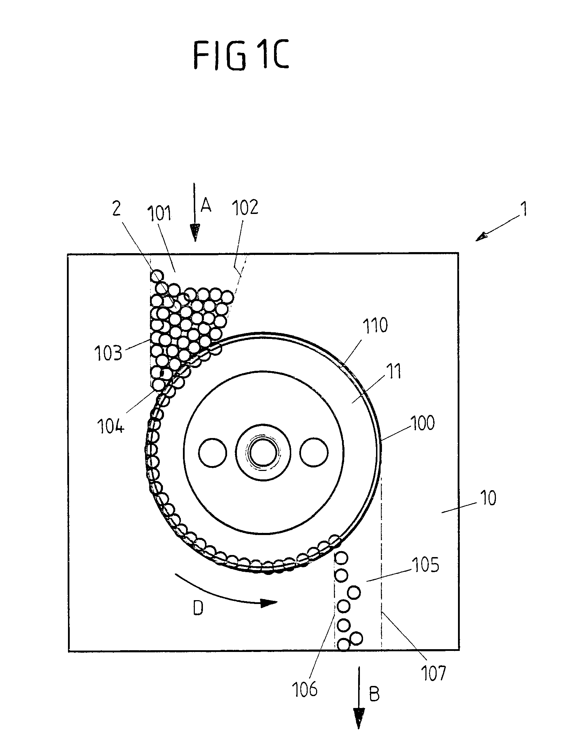

Figur 1C zeigt die Dosiervorrichtung 1 aus Figur 1A mit zu transportierenden Schüttgutpartikeln 2. In der Schüttgutzufuhr 101 befindet sich ein Vorrat von Schüttgutpartikeln 2, welche der Dosiervorrichtung 1 über einen Schüttguteinlauf A zugeführt werden. Ein Schüttguteinlauf A kann manuell oder durch jede geeignete Vorrichtung erfolgen. Die Schüttgutpartikel 2 gelangen durch die Öffnung 108 in den Schüttgutkanal 111 und in die Schüttguttaschen 112. Durch die Drehung der Dosierwalze 11 in Drehrichtung D werden die Schüttgutpartikel 2 mitgenommen und in Richtung der Schüttgutabfuhr 105 befördert.

Um einem Verklemmen von Schüttgutpartikeln 2 in der Dosiervorrichtung 1 vorzubeugen ist die in Drehrichtung D gesehen vordere Innenfläche 103 mit einer Kante 104 versehen, welche im Wesentlichen senkrecht auf die Dosierwalze 11 stößt.

Auf dem Weg von dem unteren Totpunkt 109 bis zur Schüttgutabfuhr 105 werden die Schüttgutpartikel 2 durch die Drehung der Dosierwalze 11 in der Drehrichtung D+ gegen die Schwerkraft gefördert. Hierbei wird bereits ohne weitere Maßnahmen eine gleichmäßige Verteilung von Schüttgutpartikeln 2 erreicht.

Sobald die Schüttgutpartikel 2 die Schüttgutabfuhr 105 erreichen, fallen sie aufgrund der Schwerkraft durch deren Öffnung aus der Schüttgutabfuhr 105 der Dosiervorrichtung 1 und werden einem Schüttgutauslauf B zugeführt, über den die Schüttgutpartikel 2 weiter befördert und/oder verarbeitet werden können. Durch ein zuvor erfolgtes Auflockern und Zusammenschieben der Schüttgutpartikel 2 wird durch die Dosiervorrichtung 1 eine besonders gleichmäßige Förderrate von Schüttgutpartikeln 2 erzielt.

Es sei angemerkt, dass anstelle der Schwerkraft und je nach Beschaffenheit der Schüttgutpartikel 2 beispielsweise auch ein Überdruck an die Schüttgutzufuhr 101 oder ein Unterdruck an die Schüttgutabfuhr 105 angelegt werden kann um die Beförderung der Schüttgutpartikel 2 zu erreichen. Ferner kann ein Über- oder Unterdruck an der Schüttgutzufuhr 101 und/oder an der Schüttgutabfuhr 105 dazu verwendet werden, um elektrostatisch an der Dosiervorrichtung 1 haftende Schüttgutpartikel 2 zu entfernen. Hierbei kann insbesondere gepulste Druckluft verwendet werden.

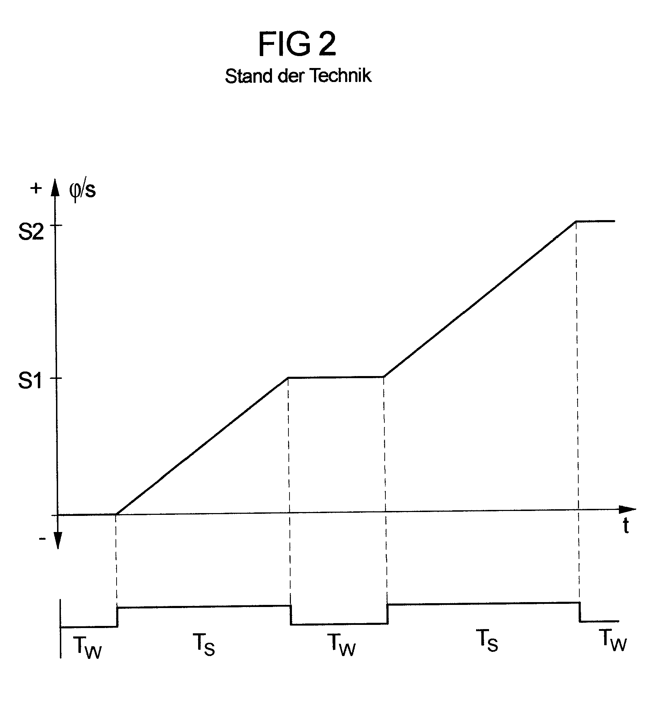

Die Figur 2 veranschaulicht anhand eines Weg-Zeit-Diagramms eine in der Praxis übliche Ansteuerung eines sich drehenden Dosierorgans, wie zum Beispiel der Dosierwalze 11 der Figuren 1A bis 1C. Hierbei ist auf der Ordinate ein (Dreh-) Winkel ϕ bzw. die Anzahl der Schritte s eines die Drehung des Dosierorgans steuernden Schrittmotors aufgetragen. Auf der Abszisse ist die Zeit t aufgetragen.

Entsprechend dem Diagramm der Figur 2 ruht das Dosierorgan, zum Beispiel die Dosierwalze 11 der Figuren 1A bis 1C, zunächst über ein Zeitintervall Tw, in dem keine Schüttgutpartikel 2 einzudosieren sind. Danach - wird zum Beispiel auf Anfrage einer nachgeschalteten Spritzgussmaschine hin - eine Förderbewegung ausgelöst. Diese Förderbewegung dauert ein definiertes Zeitintervall T_{S} an, bis das Dosierorgan um einen vorgegebenen Soll-Winkel bzw. eine vorgegebene Soll-Anzahl an Schritten S1 gedreht wurde. Hiernach stoppt das Dosierorgan erneut für die Dauer Tw, bevor in einem nachfolgenden Dosierzyklus für die Zeitdauer T_{S} wieder Schüttgutpartikel 2 an die Schüttgutabfuhr 105 gefördert und entsprechend zudosiert werden (bis zum Soll-Winkel bzw. der Soll-Anzahl Schritte S2).

Obwohl mit der dargestellten Dosiervorrichtung 1 bereits eine vergleichsweise sehr gleichmäßige Zudosierung von Schüttgutpartikeln 2 möglich ist, wenn das Dosierorgan in Form der drehbaren Dosierwalze 11 in die Drehrichtung D+ gedreht wird, hat sich gezeigt, dass speziell bei langsamen Drehbewegungen der Dosierwalze 11 - aber auch bei abweichend ausgestalteten Dosierorganen - der Einfluss der Haftreibung zwischen den Schüttgutpartikeln 2 stark zunimmt. Dies kann zu einem ungleichmäßigen Granulatabwurf führen. Statt einzelner Schüttgutpartikel 2 werden dann unter Umständen zusammenhängende Formationen von Schüttgutpartikeln 2, gegebenenfalls sogar lawinenartig, abgeworfen. Dies zieht natürlich Konzentrationsschwankungen des dosierten Additivs nach sich.

Im Zuge eines erfindungsgemäßen Dosierverfahrens wird nun das Dosierorgan im Betrieb der Dosiervorrichtung zumindest zeitweise gezielt mit einer Rüttel- und/oder Vibrationsbewegung beaufschlagt. In den nachfolgend anhand von Weg-Zeit-Diagrammen dargestellten Ausführungsvarianten wird dabei eine gleichförmige Drehbewegung des Dosierorgans gezielt mit Richtungs- und/oder Geschwindigkeitswechseln überlagert, um eine Rüttel- und/oder Vibrationsbewegung aufzubringen. So wird beispielsweise der Drehbewegung einer Dosierwalze oder Dosierschnecke als Dosierorgan eine Oszillations- und/oder Vibrationsbewegung aufmoduliert.

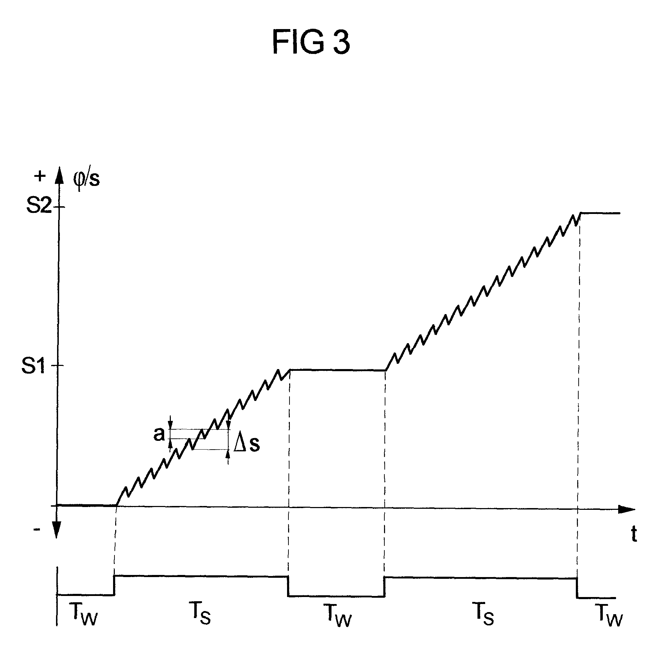

Entsprechend dem in der Figur 3 dargestellten Weg-Zeit-Diagramm wird hierbei beispielsweise über die Gesamtdauer T_{S} einer Förderbewegung des Dosierorgans die Drehbewegung mit einer Rüttel- und/oder Vibrationsbewegung überlagert. Dabei würde beispielsweise bei einer Amplitude von 1° bis 5° und/oder einer Frequenz von kleiner 5 Hz von einer Rüttelbewegung und bei einer Amplitude von 0,1° bis 2° und einer Frequenz von größer 5 Hz von einer Vibrationsbewegung gesprochen werden. Bei einer Rüttelbewegung lösen sich Schüttgutpartikel 2 zumindest zeitweilig von der transportierenden Oberfläche der Dosierwalze 11. Die Schüttung verhält kurzfristig fluidartig. Verhackungen lösen sich und die Schüttung wird neu verdichtet. Durch eine Rüttelbewegung können folglich Brücken und Verhackungen zwischen den Schüttpartikeln 2 aufgelöst werden. Dies hat sich insbesondere bei stark unterschiedlichen Partikelformen und Partikelgrößen als vorteilhaft herausgestellt, um den Dosiervorgang zu verbessern. Bei einer Vibrationsbewegung lösen sich Schüttpartikel 2 nicht vollständig voneinander oder von der transportierenden Oberfläche der Dosierwalze 11, sondern rutschen und gleiten eher an dieser durch senken der Haftreibung entlang. Hiermit lassen sich insbesondere Hohlräume zwischen den Schuttgutpartikeln 2 effektiv schließen, wodurch ein Homogenisierung der Packungsdichte im Schüttkanal 111 erreicht werden kann.

Entsprechend der Darstellung in der Figur 3 wird während der Förderbewegung des Dosierorgans eine Oszillationsbewegung mit einer gleichbleibenden Amplitude a und einer gleichbleibenden Schwingungsbreite Δs aufmoduliert. Hierdurch kann ein deutlich gleichmäßiger Masseausstoß aus dem Dosierorgan erreicht werden, da beispielsweise Haftreibungseffekte (sogenannte "slip-stick"-Effekte) zwischen den Schüttgutpartikeln 2 minimiert werden.

Dabei hat beispielsweise das Beaufschlagen einer Dosierwalze 11 entsprechend den Figuren 1A bis 1C entlang der Drehrichtung D+ unterschiedliche Auswirkungen. Hierzu sei nochmals auf die Figur 1A verwiesen, in der vier unterschiedliche Quadranten I bis IV durch die zueinander senkrechten und sich im Drehpunkt der Dosierwalze 11 kreuzenden Raumachsen X und Y veranschaulicht sind. Die vier Quadranten I bis IV unterteilen dabei die Dosierwalze 11 in der Schnittansicht der Figur 1A in vier gleichgroße Segmente. Der Quadrant I umfasst den Bereich der Dosierwalze 11, an dem über die Schüttgutzufuhr 111 Schüttgutpartikel 2 in den Schüttgutkanal 111 eingefüllt werden. In dem sich hieran in Drehrichtung D+ und damit entgegen dem Uhrzeigersinn anschließenden Quadranten II werden die Schüttgutpartikel 2 von der Dosierwalze 11 in Richtung der Schüttgutabfuhr 105 transportiert, die im Quadranten III liegt.

Bei einer Beaufschlagung der Dosierwalze 11 mit einer Rüttel- und/oder Vibrationsbewegung entsprechend dem Weg-Zeit-Diagramm der Figur 3 werden nun in den einzelnen Quadranten I bis IV unterschiedliche Effekte erzielt, die in Summe zu einem verbesserten, kontinuierlichen Partikelabwurf an der Schüttgutabfuhr 105 führen. So wird im Quadrant I beim Einfüllen der Schüttgutpartikel 2 in den Schüttgutkanal 111 der Schüttgutkanal 111 gleichmäßiger gefüllt. Im Quadrant II wird durch die Drehoszillation bzw. -vibration das Schüttgut gleichmäßiger verdichtet. Die einzelnen Schüttgutpartikel 2 richten sich stärker in Drehrichtung D+ aus und verringern so den Hohlraumanteil. Die Schütt-/Packungsdichte im Schüttgutkanal 111 wird erhöht und gleichmäßiger. Im Quadrant III wird durch die zusätzlich aufgebrachte Rüttel- und/oder Vibrationsbewegung die Haftreibung und mechanische Verhakung der Schüttgutpartikel 2 untereinander ebenfalls stark reduziert, so dass die Schüttgutpartikel 2 in erhöhtem Maße einzeln abgeworfen werden und weniger stark andere Schüttgutpartikel 2 mit sich ziehen.

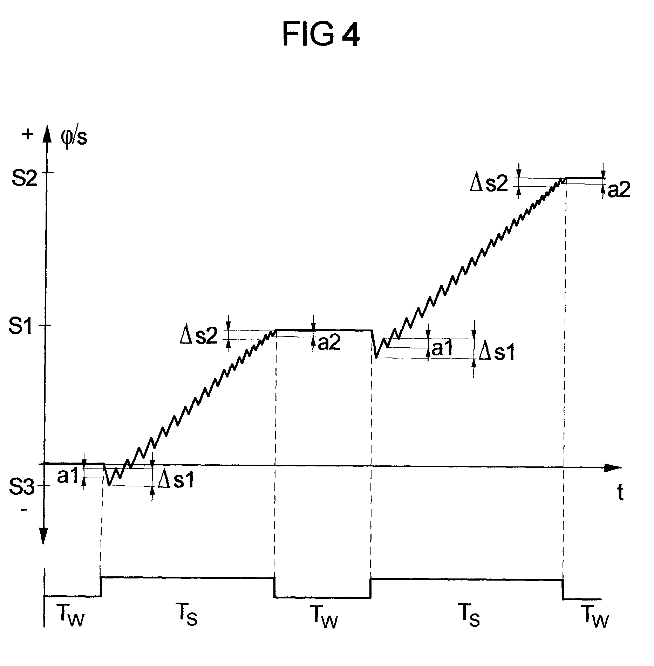

In der Figur 4 ist eine Abwandlung der Ausführungsvariante auf Basis der Figur 3 veranschaulicht. Hierbei wird die lineare Drehbewegung eines Dosierorgans nicht mit einer gleichmäßigen und gleichbleibenden Oszillation überlagert. Vielmehr wird die Stärke der Rüttel- und/oder Vibrationsbewegung während der Förderung von Schüttgutpartikeln 2 in ihrer Stärke variiert. Hierzu erfolgt eine Überlagerung mit einer Oszillation veränderlicher Amplitude a1, a2. Zu Beginn einer Förderbewegung wird eine Drehung des Dosierorgans mit einer Rüttel- und/oder Vibrationsbewegung einer ersten Stärke, gekennzeichnet durch eine Amplitude a1 und eine Schwingungsbreite Δs1 beaufschlagt. Am Ende einer Förderbewegung und damit am Ende eines Dosierzyklus erfolgt eine Beaufschlagung mit einer Rüttel- und/oder Vibrationsbewegung geringerer Stärke, gekennzeichnet durch eine kleinere Schwingungsamplitude a2 < a1 und kleinerer Schwingungsbreite Δs2 < Δs1. Beispielsweise unterscheiden sich hierbei die Schwingungsamplituden um einen Faktor von wenigstens 2, beispielsweise um einen Faktor größer 5. Beispielsweise kann durch eine starke Vibration am Beginn einer Förderbewegung die Haftreibung zwischen den Schüttgutpartikeln 2 gezielt reduziert werden. Eine schwächere Vibration am Ende des Dosierzyklus verhindert demgegenüber einen unkontrollierten Abwurf von Schüttgutpartikeln 2 an der Schüttgutabfuhr 105.

Zur Vermeidung eines unkontrollierten Abwurfs von Schüttgutpartikeln 2 zu Beginn einer Förderbewegung in Folge der erzeugten Rüttel- und/oder Vibrationsbewegung ist bei dem Ausführungsbeispiel der Figur 4 zudem vorgesehen, dass das Dosierorgan zunächst eine Rückwärtsbewegung in eine entgegengesetzte Drehrichtung D- ausführt. Dementsprechend wird das Dosierorgan, zum Beispiel die Dosierwalze 11 der Figuren 1A bis 1C, zu Beginn eines neuen Dosierzyklus zunächst um einen vorgegebenen Drehwinkel bzw. einen Soll-Anzahl Schritte S3 zurückgedreht, so dass Schüttgutpartikel 2 zunächst von der Abwurfkante der Schüttgutabfuhr 105 entfernt werden. Damit wird das Risiko minimiert, dass diese bereits durch die anschließende Rüttel- und/oder Vibrationsbewegung zu Beginn des Dosierzyklus in die Schüttgutabfuhr 105 gelangen.

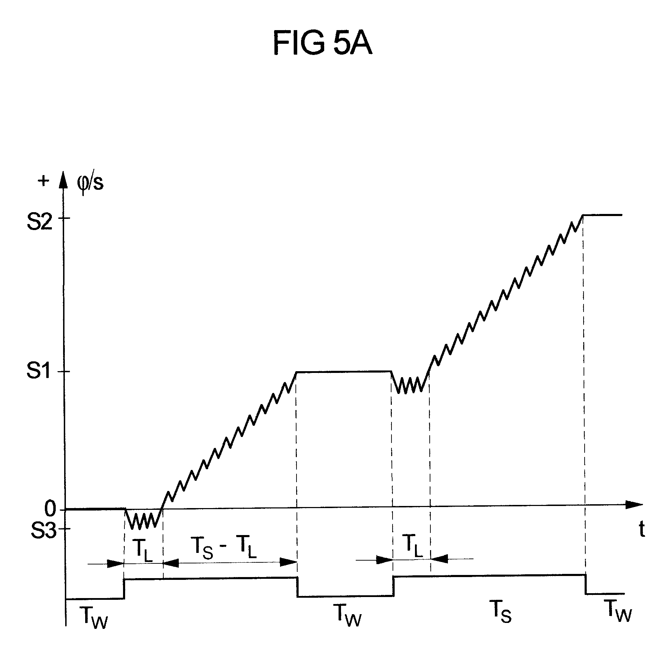

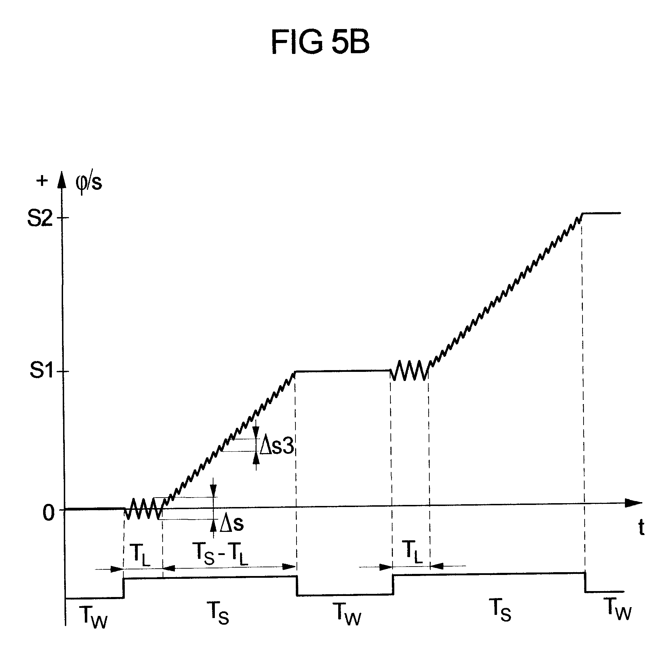

Mit den Weg-Zeit-Diagrammen der Figuren 5A und 5B werden weitere Ausführungsvarianten eines erfindungsgemäßen Dosierverfahrens veranschaulicht, bei denen das jeweilige Dosierorgan nicht nur während einer Förderbewegung mit einer Rüttel- und/oder Vibrationsbewegung beaufschlagt wird, sondern auch in einer Ruhephase zu Beginn eines Dosierzyklus. Hierbei ist jeweils vorgesehen, dass über ein Zeitintervall T_{L} vor dem Beginn einer Förderbewegung und damit einer Drehung des Dosierorgans zur Förderung von Schüttgut in Richtung der Schüttgutabfuhr 105 das Dosierorgan zu einer oszillierenden Drehung angetrieben wird. Der eigentlichen Förderbewegung wird somit eine Vibrationsphase zu Beginn des Dosierzyklus vorgeschaltet, um die Haftreibung zwischen den Schüttgutpartikeln 2 zu lösen und die Schüttung in dem jeweiligen Schüttgutkanal des Dosierorgans zu verdichten.

Bei einer Variante gemäß der Figur 5A wird dabei zu Beginn eines Dosierzyklus das Dosierorgan zunächst um einen vorgegebenen Soll-Drehwinkel bzw. eine Soll-Anzahl Schritte S3 entgegengesetzt zu der späteren Drehrichtung D+ (in Drehrichtung D-) zurückgedreht und anschließend mit einer Rüttel- und/oder Vibrationsbewegung beaufschlagt. Anschließend erfolgen eine Drehung in die Ausgangsposition und der Beginn der Förderbewegung jeweils in Drehrichtung D+. Grundsätzlich kann im Anschluss an die Rüttel- und/oder Vibrationsphase zu Beginn des Dosierzyklus eine gleichförmige Drehbewegung vorgesehen sein. Bei einer Ausführungsvariante entsprechend der Figur 5A ist aber vorgesehen, dass auch während der sich anschließenden Förderbewegung das Dosierorgan eine oszillierende Drehbewegung ausführt, um auch während des weiteren Dosierzyklus gerüttelt oder vibriert zu werden.

Bei der Variante gemäß dem Diagramm der Figur 5B erfolgt zu Beginn eines Dosierzyklus in dem anfänglichen Zeitintervall T_{L} keine Rückwärtsbewegung des jeweiligen Dosierorgans, sondern es erfolgt eine Oszillation des Dosierorgans um die zuletzt eingenommene Stellung und damit die Startstellung des neuen Dosierzyklus. Die anfängliche Rüttel- und/oder Vibrationsbewegung mit einer Schwingungsbreite Δs ist dabei größer als eine Schwingungsbreite Δs3 während der nachfolgenden Förderbewegung. Selbstverständlich ist auch eine Umkehrung dieses Verhältnisses der Schwingungsbreiten in den Zeitintervallen T_{L} und (T_{S}-T_{L}) sowie der zugehörigen Schwingungsamplituden möglich

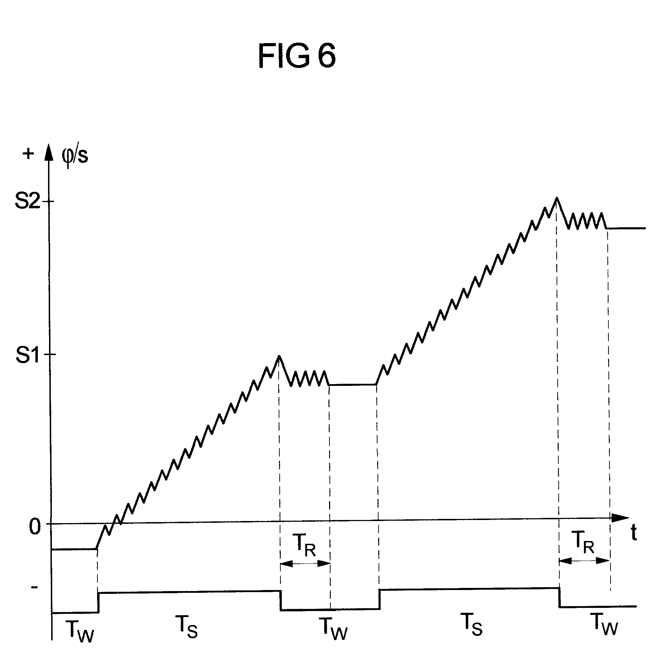

Mit dem Weg-Zeit-Diagramm der Figur 6 wird eine weitere Variante eines erfindungsgemäßen Dosierverfahrens veranschaulicht. Hierbei ist vorsehen, dass ein Dosierorgan, zum Beispiel die Dosierwalze 11 der Dosiervorrichtung 1 der Figuren 1A bis 1C, am Ende eines Dosierzyklus und nach dem Abschluss einer Förderbewegung, der eine Rüttel- und/oder Vibrationsbewegung überlagert war, eine Rückwärtsbewegung ausführt.

Dies ist in dem Diagramm der Figur 6 dadurch veranschaulicht, dass am Ende einer über das Zeitintervall T_{S} andauernden Förderbewegung zu Beginn eines sich anschließenden Zeitintervalls T_{R} eine Rückwärtsbewegung vorgesehen ist. In der hierdurch eingenommenen Stellung des Dosierorgans wird dieses wieder während des Zeitintervalls T_{R} zu einer oszillierenden Drehbewegung angetrieben und verbleibt dann über den Rest des Zeitintervalls (T_{W}-T_{R}) zwischen zwei Dosierzyklen in Ruhe. Durch die Rüttel- und/oder Vibrationsbewegung in dem Zeitraum T_{R} nach dem Ende eines Dosierzyklus wird die an oder in dem Dosierorgan vorhandene Schüttung zunächst von der Abwurfkante wegbewegt und anschließend gerüttelt, um insbesondere eine Erhöhung der Schüttgut- bzw. Packungsdichte zu erreichen. Bei Start eines nachfolgenden Dosierzyklus wird durch das Dosierorgan zunächst der zuvor zurückgelegte Drehwinkel überbrückt. Dies kann durch eine gleichförmige Drehbewegung geschehen oder durch eine Drehbewegung, die bereits mit einer Rüttel- und/oder Vibrationsbewegung überlagert ist.

Wie anhand der beigefügten Figuren gezeigt ist, ist es im Rahmen eines erfindungsgemäßen Verfahrens insbesondere möglich, ein drehendes Dosierorgan, wie zum Beispiel eine Dosierwalze 11, Dosierschnecke oder Dosierscheibe, für die Dosierung von Schüttgutpartikeln 2 durch gezielte Richtungs- und/oder Geschwindigkeitswechsel mit einer Rüttel- und/oder Vibrationsbewegung zu beaufschlagen, um einen gleichmäßigeren Masseausstoß zu erreichen. Hierbei kann auch vorgesehen werden, das Dosierorgan eine Rückwärtsbewegung ausführen zu lassen, um Schüttgutpartikel in einen Bereich ohne Abwurfrisiko in Folge der Rüttel- und/oder Vibrationsbewegung zu verfahren, wenn der eigentliche Dosierzyklus bereits beendet oder noch nicht gestartet ist. Darüber hinaus ist auch eine Hintereinanderschaltung verschiedener Rüttel- und Dosierbewegungen (gleichförmig und/oder oszillierend) möglich.

Gemäß einem zweiten Erfindungsaspekt kann die Dosierwalze 11 alternativ oder ergänzend zu den zuvor beschriebenen Rüttel- und/oder Vibrationsbewegungen auch derart betrieben werden, dass zur Förderung von Schüttgutpartikeln 2 zu der Schüttgutabfuhr 105 in eine erste Drehrichtung D+ mit einer ersten Drehgeschwindigkeit gedreht wird und die Dosierwalze 11 vor dem Beginn und/oder nach dem Ende einer Förderbewegung eine Rückwärtsbewegung durch eine Drehung in die entgegengesetzte zweite Drehrichtung D- mit einer zu der ersten Drehgeschwindigkeit größeren zweiten Drehgeschwindigkeit ausführt.

Indem die Dosierwalze 11 mit relativ hoher Geschwindigkeit um einen Drehwinkel ϕ₂ zurückgedreht wird, rutscht die Dosierwalze 11 quasi unter den an der Schüttgutzufuhr 101 vorgehaltenen Schüttpartikeln 2 durch. Wird die Dosierwalze 11 anschließend mit einer langsameren Drehgeschwindigkeit um den gleichen oder einen kleineren Drehwinkel ϕ₁ wieder nach vorne, d.h., in Drehrichtung D+ und in Richtung der Schüttguttabfuhr 105, gedreht, werden über die Dosierwalze 11 wieder Schüttgutpartikel 102 transportiert. Die zu dosierende Materialmenge kann über die Anzahl der Hübe je Zeiteinheit, die Drehgeschwindigkeiten der Dosierwalze 11 und den Drehwinkel ϕ₁ kontrolliert werden.

In einer Variante wird nur ein Bruchteil, z.B. ca. 2 / 3, der Dosierwalze 11 für den Transport der Schüttgutpartikel 2 genutzt. Der für den Transport nicht genutzte Teil kann beispielsweise mit einem Entleerkanal versehen werden, durch den auf einfache und auch automatisierte Weise Schüttgut abgelassen werden kann.

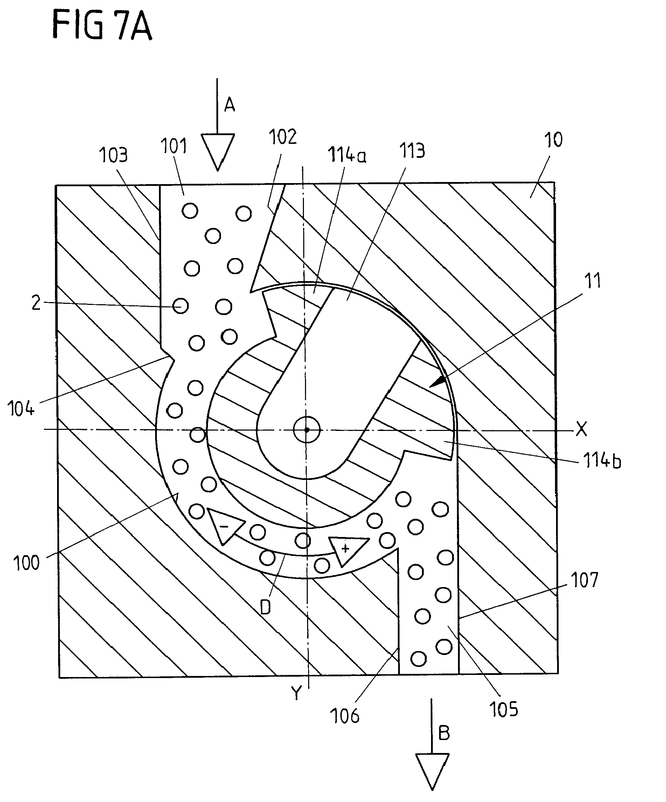

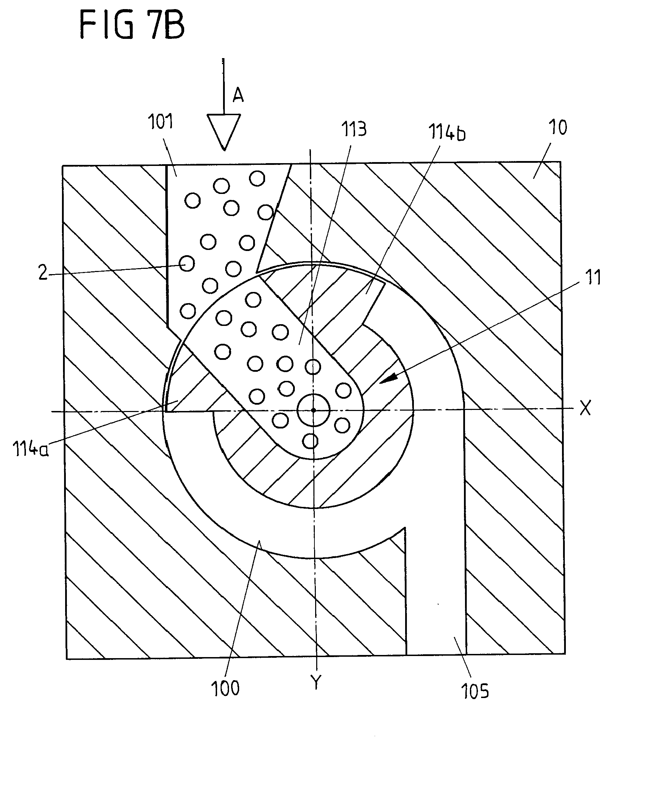

In den Figuren 7A und 7B ist ein Ausführungsbeispiel mit einem solchen Entleerkanal 113 veranschaulicht. Die Dosierwalze 11 weist hier einen sich radial zu Drehachse erstreckenden Entleerkanal 113 auf. Während eines normalen Dosiervorgangs gelangt kein Schüttgut in den Entleerkanal 113, da dessen Öffnung an der Dosierwalze 11 durch zwei radial vorspringende Randabschnitte 114a, 114b der Dosierwalze 11 berandet ist, durch die der Spalt zwischen der Mantelfläche der Dosierwalze 11 und der Innenfläche 100 des Gehäuses 10 soweit reduziert ist, dass kein Schüttpartikel 2 hinein gelangen kann. Über einen in Drehrichtung D- liegenden, vorspringenden Randabschnitt 114b wird auch der Nachstrom von Schüttpartikeln 2 aus der Schüttgutzufuhr 101 in Richtung der Schüttgutabfuhr 105 während eines Dosiervorgangs kontrolliert. So kann hierüber die Schüttgutabfuhr 105 verschlossen und gezielt stufenlos oder stufenweise freigegeben werden, so dass Schüttgutpartikel 2 in der gewünschten Menge an der Mantelfläche der Dosierwalze 11 entlang in die Schüttabfuhr 105 strömen. In der in der Figur 7A dargestellten Position der Dosierwalze 11 gibt der Randabschnitt 114b die Schüttgutabfuhr 105 vollständig frei. Gleichzeitig ist der in Umfangsrichtung gegenüberliegende Randabschnitt 114a noch zur Schüttgutzufuhr 101 beabstandet, so dass eine maximal mögliche Menge an Schüttpartikeln 2 zu dosiert wird.

Befindet sich die Dosierwalze 11 in einer Entleerposition entsprechend der Figur 7B, ist die Öffnung des Entleerkanals 113 mit der Schüttzufuhr 101 zur Deckung gebracht. Schüttpartikel 2 können somit aus der Schüttgutzufuhr 101 in den Entleerkanal 113 innerhalb der Dosierwalze 11 einströmen. Die derart innerhalb der Dosierwalze 11 aufgenommen Schüttgutpartikel 2 können erst durch Drehung der Dosierwalze 11 in die Drehrichtung D+ (gegen den Uhrzeigersinn) aus dem Entleerkanal 113 zur Schüttabfuhr 105 gefördert werden. Hierbei ist durch die radial vorspringenden Randabschnitte 114a, 114b verhindert, dass zusätzliche Schüttgutpartikel 2 aus der Schüttgutzufuhr 101 in die Schüttgutabfuhr 105 gelangen.

Ein erfindungsgemäßes Dosierverfahren und eine erfindungsgemäße Dosiervorrichtung können dabei insbesondere bei einem Mikrospritzgießverfahren ("micro injection moulding") zum Einsatz kommen. Hier sind üblicherweise sehr kurze Plastifizierschnecken im Einsatz, die über eine wesentlich schlechtere Mischwirkung als herkömmliche Plastifiziereinheiten verfügen. Ein Partikel (Granulatkörnchen) mehr oder weniger pro Dosierzyklus hat hier unter Umständen große Folgen für die Produktqualität, so dass der durch die vorliegende Erfindung erzielbare deutlich gleichmäßigere Masseausstoß und die damit verbundene Reduzierung von Konzentrationsschwankungen besonders vorteilhaft sind.

### Bezugszeichenliste:

- 1: Dosiervorrichtung

- 10: Gehäuse
- 100: Innenfläche des Gehäuses
- 101: Schüttgutzufuhr
- 102: hintere Innenfläche der Schüttgutzufuhr
- 103: vordere Innenfläche der Schüttgutzufuhr
- 104: senkrechte Kante
- 105: Schüttgutabfuhr
- 106: hintere Innenfläche der Schüttgutabfuhr
- 107: vordere Innenfläche der Schüttgutabfuhr
- 108: oberer Totpunkt
- 109: unterer Totpunkt

- 11: Dosierwalze
- 110: Mantelfläche der Dosierwalze
- 111: Schüttgutkanal
- 112: Schüttguttaschen
- 113: Entleerkanal
- 114a, 114b: Randabschnitt

- 2: Schüttgutpartikel

- X: wagrechte Achse
- Y: senkrechte Achse

- A: Schüttguteinlauf
- a, a1, a2: Amplitude
- B: Schüttgutauslauf
- D: Drehrichtung der Dosierwalze
- s: Strecke / Schritte
- S1, S2, S3: Sollwinkel / Sollanzahl Schritte
- t: Zeit
- T_{L}, T_{R,} T_{S}, T_{W}: Zeitintervall

- ϕ: Winkel
- Δs, Δs1, Δs2, Δs3: Schwingungsbreite

## Patentansprüche

1. Verfahren zur Dosierung von Schüttgutpartikeln unter Verwendung einer Dosiervorrichtung (1), wobei ein Dosierorgan (11) der Dosiervorrichtung (1) durch Drehung eine Förderbewegung ausführt, um Schüttgutpartikel (2) zu dosieren und ausgehend von einer Schüttgutzufuhr (101) der Dosiervorrichtung (1) zu einer Schüttgutabfuhr (105) der Dosiervorrichtung (1) zu fördern,
**dadurch gekennzeichnet, dass**
das Dosierorgan (11) im Betrieb der Dosiervorrichtung (1) zumindest zeitweise gezielt mit einer Rüttel- und/oder Vibrationsbewegung beaufschlagt wird.

2. Verfahren nach Anspruch 1, **dadurch gekennzeichnet, dass** das Dosierorgan (11) während einer Förderbewegung mit einer Rüttel- und/oder Vibrationsbewegung beaufschlagt wird.

3. Verfahren nach Anspruch 2, **dadurch gekennzeichnet, dass** das Dosierorgan (11) über die Gesamtdauer (Ts) der Förderbewegung mit einer Rüttel- und/oder Vibrationsbewegung beaufschlagt wird.

4. Verfahren nach einem der Ansprüche 1 bis 3, **dadurch gekennzeichnet, dass** das Dosierorgan (11) vor dem Beginn und/oder nach dem Ende einer Förderbewegung mit einer Rüttel- und/oder Vibrationsbewegung beaufschlagt wird.

5. Verfahren zur Dosierung von Schüttgutpartikeln unter Verwendung einer Dosiervorrichtung (1), insbesondere nach einem der Ansprüche 1 bis 4, wobei ein Dosierorgan (11) der Dosiervorrichtung (1) durch Drehung eine Förderbewegung ausführt, um Schüttgutpartikel (2) zu dosieren und ausgehend von einer Schüttgutzufuhr (101) der Dosiervorrichtung (1) zu einer Schüttgutabfuhr (105) der Dosiervorrichtung (1) zu fördern,
**dadurch gekennzeichnet, dass**
das Dosierorgan (11) zur Förderung von Schüttgutpartikeln (2) zu der Schüttgutabfuhr (105) in eine erste Drehrichtung (D+) mit einer ersten Drehgeschwindigkeit gedreht wird und das Dosierorgan (11) vor dem Beginn und/oder nach dem Ende einer Förderbewegung eine Rückwärtsbewegung durch eine Drehung in eine entgegengesetzte zweite Drehrichtung (D-) mit einer zu der ersten Drehgeschwindigkeit verschiedenen zweiten Drehgeschwindigkeit ausführt.

6. Verfahren nach Anspruch 5, **dadurch gekennzeichnet, dass** die erste Drehgeschwindigkeit kleiner als die zweite Drehgeschwindigkeit ist, insbesondere um wenigstens 25% kleiner.

7. Verfahren nach Anspruch 5 oder 6, **dadurch gekennzeichnet, dass** ein Zurückdrehen mit der zweiten Drehgeschwindigkeit um einen zweiten Drehwinkel (ϕ₂) erfolgt, der mindestens so groß ist wie ein erster Drehwinkel (ϕ₁), um den das Dosierorgan (11) zuvor zur Förderung von Schüttgutpartikeln (2) mit der ersten Drehgeschwindigkeit gedreht wurde.

8. Verfahren nach einem der vorhergehenden Ansprüche, **dadurch gekennzeichnet, dass** das Dosierorgan (11) zur Förderung von Schüttgutpartikeln (2) zu der Schüttgutabfuhr (105) in eine erste Drehrichtung (D+) gedreht wird und das Dosierorgan (11) vor dem Beginn und/oder nach dem Ende einer Förderbewegung eine Rückwärtsbewegung durch eine Drehung in eine entgegengesetzte zweite Drehrichtung (D-) ausführt.

9. Verfahren nach Anspruch 8, **dadurch gekennzeichnet, dass** das Dosierorgan (11) nach dem Ende der Rückwärtsbewegung mit einer Rüttel- und/oder Vibrationsbewegung beaufschlagt wird und/oder dass das Dosierorgan (11) zumindest zeitweise während der Rückwärtsbewegung oder über die Gesamtdauer der Rückwärtsbewegung mit einer Rüttel- und/oder Vibrationsbewegung beaufschlagt wird.

10. Verfahren nach Anspruch 9, **dadurch gekennzeichnet, dass**
- das Dosierorgan (11) zum Abschluss eines Dosierzyklus, während dem durch die Förderbewegung des Dosierorgans (11) Schüttgutpartikel (2) zu der Schüttgutabfuhr (105) gefördert werden, eine Rückwärtsbewegung in die zweite Drehrichtung (D-) ausführt und hierdurch eine Startstellung für einen neuen Dosierzyklus einnimmt oder
- das Dosierorgan (11) zum Abschluss eines Dosierzyklus, während dem durch die Förderbewegung des Dosierorgans (11) Schüttgutpartikel (2) zu der Schüttgutabfuhr (105) gefördert werden, eine Rückwärtsbewegung in die zweite Drehrichtung (D-) ausführt und anschließend wieder in die erste Drehrichtung (D+) verstellt wird, um eine Startstellung für einen neuen Dosierzyklus einzunehmen.

11. Verfahren nach einem der vorhergehenden Ansprüche, **dadurch gekennzeichnet, dass** das Dosierorgan (11) im Betrieb der Dosiervorrichtung (1) mit Rüttel- und/oder Vibrationsbewegungen unterschiedlicher Stärke beaufschlagt wird.

12. Verfahren nach einem der Ansprüche 8 bis 10 und dem Anspruch 11, **dadurch gekennzeichnet, dass** das Dosierorgan (11) während einer Förderbewegung mit einer Rüttel- und/oder Vibrationsbewegung einer ersten Stärke beaufschlagt wird und das Dosierorgan (11) während einer Rückwärtsbewegung und/oder nach Abschluss einer Rückwärtsbewegung mit wenigstens einer Rüttel- und/oder Vibrationsbewegung einer hierzu unterschiedlichen zweiten Stärke beaufschlagt wird.

13. Verfahren nach einem der vorhergehenden Ansprüche, **dadurch gekennzeichnet, dass** eine Rüttel- und/oder Vibrationsbewegung durch eine oszillierende Drehbewegung des Dosierorgans (11) erzeugt wird.

14. Dosiervorrichtung für Schüttgutpartikel, mit einem die Schüttgutpartikel (2) dosierenden Dosierorgan (11), das durch Drehung eine Förderbewegung ausführt, um Schüttgutpartikel (2) zu dosieren und ausgehend von einer Schüttgutzufuhr (101) der Dosiervorrichtung (1) zu einer Schüttgutabfuhr (105) der Dosiervorrichtung (1) zu fördern,
**dadurch gekennzeichnet, dass**
die Dosiervorrichtung (1) wenigstens einen fremdkraftbetätigten Stellantrieb aufweist, mittels dem
- das Dosierorgan (11) im Betrieb der Dosiervorrichtung (1) zumindest zeitweise gezielt mit einer Rüttel- und/oder Vibrationsbewegung beaufschlagt wird und/oder
- das Dosierorgan (11) zur Förderung von Schüttgutpartikeln (2) zu der Schüttgutabfuhr (105) in eine erste Drehrichtung (D+) mit einer ersten Drehgeschwindigkeit gedreht wird und das Dosierorgan (11) vor dem Beginn und/oder nach dem Ende einer Förderbewegung in eine entgegengesetzte zweite Drehrichtung (D-) mit einer zu der ersten Drehgeschwindigkeit verschiedenen zweiten Drehgeschwindigkeit gedreht wird.

15. Dosiervorrichtung nach Anspruch 14, **dadurch gekennzeichnet, dass** mittels des Stellantriebs das Dosierorgan (11) für die Ausführung der Förderbewegung drehbar ist und der Stellantrieb darüber hinaus dazu ausgebildet und vorgesehen ist, durch eine oszillierende Drehbewegung des Dosierorgans (11) die Förderbewegung mit einer Rüttel- und/oder Vibrationsbewegung zu überlagern.
